# DEMANDE DE BREVET EUROPEEN

(11) **EP 0 571 250 A1**
(43) Date de publication de la demande: **24.11.1993**
(21) Numéro de dépôt: 93401227.9
(22) Date de dépôt: 13.05.1993
(51) Int. Cl.: H04Q 7/04, H04B 7/26, H04M 1/72

(54) **Installation téléphonique à borne fixe et postes autonomes**

(30) Priorité: 20.05.1992 FR 9206140
(71) Demandeur: DASSAULT AUTOMATISMES ET TELECOMMUNICATIONS, F-78370 Plaisir (FR)
(72) Inventeur: Boisseau, Laurent, F-78180 Montigny-le-Bretonneux (FR)
(74) Mandataire: Plaçais, Jean-Yves

(57) **Abrégé**

En présence d'une grandeur inférieure à un seuil prédéterminé, les moyens de traitement de la borne fixe (BFR) mémorisent l'identité du poste autonome (PA1 ou PA2) appelant et calculent un retard à la réponse d'établissement en fonction de la valeur de la grandeur ainsi mesurée.

Une fois le retard à la réponse écoulé, les moyens de traitement recherchent si le poste autonome ainsi identifié émet toujours, et en cas d'un résultat de recherche positif, la borne (BFR) répond alors audit poste tandis que pendant l'écoulement du retard, la borne répond immédiatement à un autre poste autonome qui effectue, sur l'un des canaux de l'ensemble des canaux scrutés, une demande d'établissement présentant une grandeur de qualité supérieure au seuil prédéterminé.

## Description

L'invention se rapporte au domaine technique de la télécommunication et plus particulièrement à la téléphonie dite "mobile" mettant en oeuvre une liaison radioélectrique entre des postes autonomes mobiles ou combinés et des bornes fixes reliées à un réseau téléphonique public ou privé.

Elle trouve une application générale dans le téléphone sans fil de seconde génération défini dans la norme européenne CAI (IETS 300131) pour "Common Air Interface" et plus particulièrement dans le système POINTEL (Marque déposée), connu aussi sous le nom de BI-BOP (Marque déposée).

Généralement, une installation téléphonique à borne fixe et postes autonomes comprend :
- au moins une borne fixe reliée à un réseau téléphonique ;
- au moins deux postes autonomes capables respectivement d'une intercommunication avec la borne fixe à travers un milieu de communication radioélectrique reliant à distance la borne fixe et chacun des postes autonomes ; et

En pratique, la borne fixe comprend des moyens de traitement propres à scruter au moins un sous-ensemble des canaux du milieu de transmission radioélectrique pour déterminer si l'un des postes autonomes demande l'établissement d'une communication sur l'un des canaux dudit sous-ensemble pendant une durée prédéterminée allouée à ce canal, la borne fixe choisissant le premier canal dudit sous-ensemble aléatoirement et passant ensuite à l'écoute du canal suivant en cas d'absence de demande d'établissement pendant ladite durée alloué à ce canal.

Par ailleurs, les moyens de traitement sont propres, en présence d'une demande d'établissement sur un canal dudit sous-ensemble, à mesurer une grandeur de qualité de ladite demande d'établissement, et à comparer ladite grandeur à un seuil prédéterminée, en présence d'une grandeur de qualité supérieure au seuil prédéterminé, la borne fixe étant propre à répondre immédiatement à la demande d'établissement.

Dans le cas d'une grandeur de qualité inférieure au seuil prédéterminé qui correspond généralement à une borne éloignée du poste autonome, ladite borne éloignée soit ne répond pas à la demande d'appel, ce qui a pour conséquence de perdre ladite demande d'appel, soit répond malgré la qualité médiocre de la liaison radio, ce qui a pour conséquence de perdre éventuellement l'établissement d'une liaison radio de meilleure qualité avec une autre borne, plus proche.

L'invention apporte justement une solution à ce problème.

Ainsi, un but de l'invention est d'éviter qu'un poste autonome établisse une liaison radio de qualité médiocre avec une borne éloignée alors qu'une liaison radio de meilleure qualité pourrait s'établir avec une autre borne plus proche.

Un autre but de l'invention est de fournir une installation dans laquelle la liaison radio avec la borne la plus proche n'est pas systématiquement établie, mais dans laquelle la liaison radio est établie lorsqu'elle présente une qualité acceptable.

Ainsi, selon une définition générale de l'invention, en présence d'une grandeur de qualité inférieure au seuil prédéterminé, les moyens de traitement de la borne fixe mémorisent l'identité du poste autonome appelant et calculent un retard à la réponse à la demande d'établissement fonction de la valeur de la grandeur ainsi mesurée ;
- une fois le retard à la réponse écoulé, les moyens de traitement recherchent si le poste autonome ainsi identifié émet toujours, et en cas d'un résultat de recherche positif, la borne répond alors audit poste, tandis que pendant l'écoulement du retard, la borne répond immédiatement à un autre poste autonome qui effectue, sur l'un des canaux de l'ensemble des canaux scrutés, une demande d'établissement présentant une grandeur de qualité supérieure au seuil prédéterminé.

En pratique, la grandeur de qualité d'une demande d'établissement de communication correspond au niveau d'intensité du signal reçu.

Selon un mode particulier de l'invention, la recherche s'effectue sur l'ensemble des canaux scrutés.

D'autres caractéristiques et avantages de l'invention apparaîtront à la lumière de la description détaillée ci-après et des dessins annexés sur lesquels :
- la figure 1 est une vue schématique d'une installation téléphonique classique à postes autonomes et borne fixe ;
- la figure 2 est une vue schématique d'une borne fixe classique ;
- la figure 3 est un organigramme illustrant le fonctionnement de l'installation selon l'invention ; et
- la figure 4 est une vue schématique d'un dispositif de mesure du niveau d'intensité du signal reçu selon l'invention.

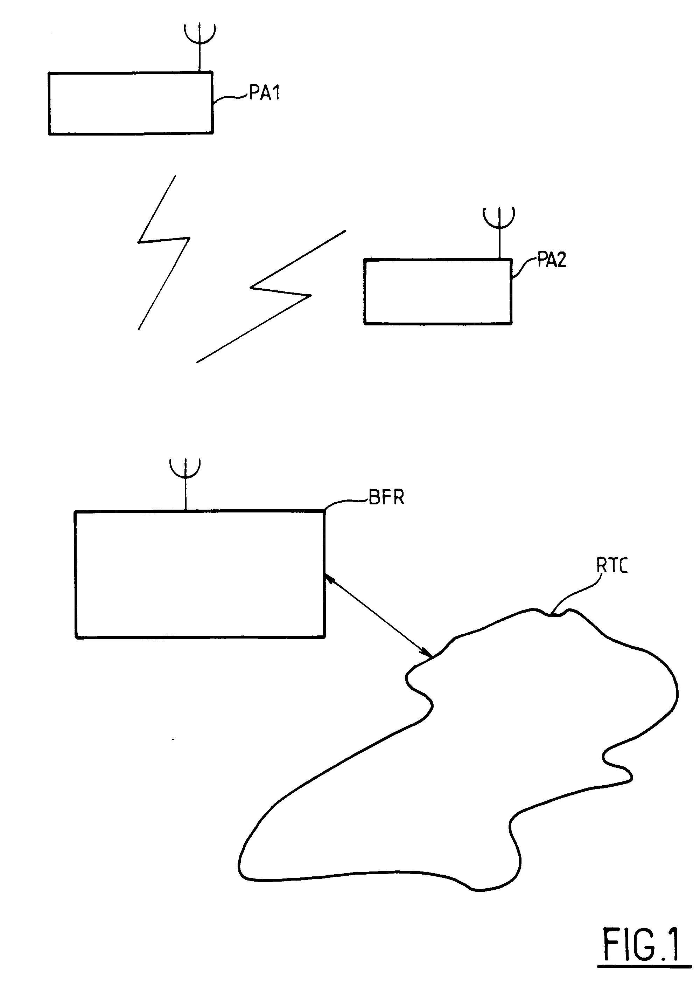

Sur la figure 1, on a représenté une installation téléphonique classique à postes autonomes et borne fixe.

La borne fixe BFR est reliée à un réseau téléphonique commuté public ou privé RTC.

Au moins deux postes autonomes PA1 et PA2 sont capables respectivement d'une intercommunication avec la borne fixe à travers un milieu de communication radioélectrique reliant à distance la borne fixe et chacun des postes autonomes.

En pratique, l'établissement de la liaison radio est à l'initiative du poste autonome sous la forme d'une requête transmise selon un type multiplex prédéterminé appelé MUX3 selon la norme CAI dans lequel une durée de 10 ms est attribuée à l'émission et une durée de 4 ms à la réception.

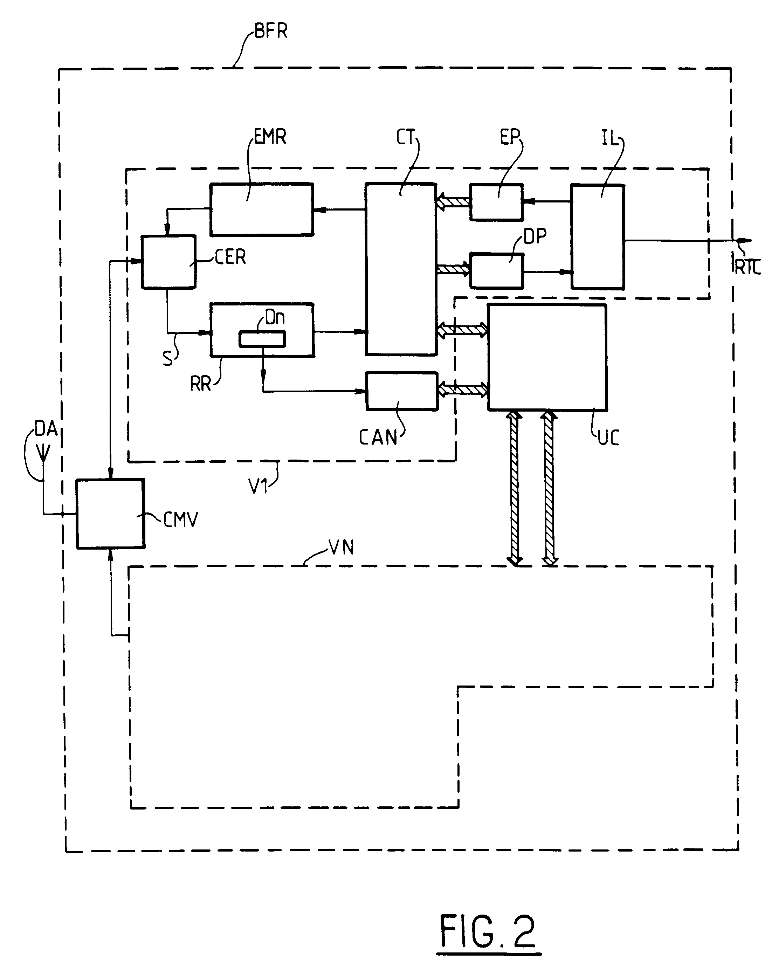

Sur la figure 2, on a représenté les moyens essentiels et constitutifs d'une borne fixe classique.

La borne BFR comprend une pluralité de voies, identiques et individualisées en V1 à Vn.

Une unité de contrôle UC est commune à toutes les voies de la borne .

L'unité UC est articulée autour d'un microprocesseur doté d'une mémoire contenant un logiciel de contrôle de la borne. Il est à noter que l'unité UC est aussi chargée de la gestion des éléments de la borne représentés sur la figure 2, même si, pour des raisons de simplification, toutes les liaisons fonctionnelles relatives à ces éléments ne sont pas représentées sur ladite figure 2.

Chaque voie V comprend :
- un encodeur EP et un décodeur DP de parole permettant la conversion des signaux de paroles téléphoniques numériques ou analogiques en données binaires conformes au codage appelé "MICDA" selon l'avis G721 du CCITT ;
- une interface ligne IL permettant le raccordement de l'encodeur EP et du décodeur DP au réseau RTC numérique ou analogique ;
- un contrôleur de trame CT chargé de l'assemblage-désassemblage sous forme de trame des données binaires échangées sur la liaison radio (parole et signalisation) conformément à la CAI ;
- un émetteur radio EMR chargé de l'émission et de la modulation des données binaires sur un des 40 canaux radio définis dans la CAI ;
- un récepteur radio RR chargé de la réception et de la démodulation des données binaires sur un des 40 canaux radio définis dans la CAI,
- un coupleur émission/réception CER chargé de la gestion de la transmission en alternat conformément à la CAI ; et
- le cas échéant, un coupleur multi-voies CMV permettant le couplage des voies radio à un dispositif d'antennes DA.

Le récepteur RR comprend en outre selon l'invention un dispositif de mesure DM chargé de mesurer le niveau de l'intensité du signal reçu S et d'élaborer un signal analogique représentatif de la mesure .

Le niveau de l'intensité du signal reçu est appelé encore RSSI par l'homme de l'art pour "Receive Signal Strength Indicator".

Un convertisseur analogique numérique CAN est chargé de la conversion du niveau d'intensité du signal reçu RSSI analogique en une valeur numérique disponible pour l'unité de contrôle UC.

Dans certain cas, la disposition des bornes installées peut faire qu'un poste autonome soit proche d'une première borne et quasiment en limite de portée d'une deuxième borne.

Or, il est tout à fait envisageable que la liaison radio s'établisse entre le poste autonome et la deuxième borne.

Dans ce cas, la liaison radio ainsi établie est de qualité médiocre comparée à celle qui aurait pu être établie avec la première borne.

Il est alors possible que l'utilisateur du poste autonome, qui ne sait pas avec quelle borne il est en liaison, et afin d'améliorer la qualité de la communication, se rapproche de la première borne, qu'il peut éventuellement repérer grâce à la signalétique du service téléphonique considéré, et en conséquence, s'éloigne de la seconde borne avec laquelle il est cependant en liaison radio.

Le résultat de ce déplacement fait que contrairement à l'attente de l'utilisateur, la qualité de la communication va en se dégradant, voire jusqu'à la rupture de la liaison radio.

L'impression subjective de l'utilisateur, en terme de qualité de service, est négative alors que techniquement le système fonctionne conformément à ses spécifications.

Le Demandeur s'est posé le problème de fournir une solution à ce problème.

Ainsi un premier but de l'invention est de fournir une installation qui ne vise pas à établir systématiquement une liaison radio avec la borne la plus proche, mais établir une liaison radio avec une borne avec laquelle la liaison radio présente une qualité acceptable.

La solution selon l'invention consiste à définir tout d'abord une grandeur de qualité de la demande d'établissement d'une communication et un seuil de qualité supérieur au seuil de fonctionnement défini dans la CAI.

L'établissement de la liaison radio étant à l'initiative du poste autonome, la grandeur de qualité est par exemple évaluée par une mesure du niveau d'intensité RSSI du signal reçu par la borne.

L'invention consiste ensuite à mettre en oeuvre un retard sur la réponse de la borne.

La mise en oeuvre d'un retard sur la réponse de la borne doit vérifier certaines exigences déterminées par la CAI.

En effet, la norme CAI impose à la borne de répondre dans un délai inférieur à 18 millisecondes voire 4 millisecondes suivant la détection du message d'appel du poste autonome.

En conséquence, le retard introduit doit être assez grand pour permettre à une borne plus proche de répondre sans risque de collision sur la liaison radio, et assez court pour permettre l'établissement de la communication si aucune autre borne ne répond.

Les valeurs théoriques extrêmes de ce retard, en référence à la CAI, sont alors :
- au minimum 56 millisecondes, ce qui correspond au temps de transmission par une borne du signal appelé ACW "LINK_GRANT" selon le type de transmission appelé MUX2 dans lequel une durée de 1ms est attribuée à l'émission et une durée de 1 ms à la réception;
- au maximum 5 secondes, ce qui correspond au temps maximum d'émission en MUX3 du poste autonome, toutes tentatives confondues.

La transmission radio entre le poste autonome et la borne étant réalisée par une transmission numérique, la bonne qualité de cette transmission se définit par un taux d'erreur sur les bits ainsi transmis.

On rappelle que la CAI définit un seuil limite pour le fonctionnement du système, appelé sensibilité, à savoir un taux d'erreur inférieur ou égal à 10⁻³ pour un signal reçu d'au moins 40 dBµV / m (soit -100 dBm/50 Ohms lorsque le signal est appliqué au connecteur d'antenne).

L'homme de l'art sait qu'il existe une relation entre le taux d'erreur sur une liaison de transmission et le rapport signal à bruit et par conséquent, avec le niveau du signal en entrée du récepteur.

En fait, compte tenu du peu d'informations transmises lors de l'établissement d'une liaison poste autonome-borne, il n'est pas possible de calculer directement un taux d'erreur avec une précision suffisante. On définit alors un seuil de bonne qualité par la mesure du niveau d'intensité du signal reçu par la borne (Receive Signal Strength Indicator) appelé encore RSSI lors de la réception en MUX3 du poste autonome tentant un appel. Ce seuil a évidemment une valeur supérieure à la valeur de la sensibilité définie dans la CAI (-100 dBm).

Ainsi, selon l'invention, si le niveau du signal reçu mesuré par la borne lors de la réception en MUX3 est supérieur au seuil de bonne qualité, l'algorithme selon l'invention n'est pas mis en oeuvre et la réponse est émise immédiatement par la borne.

Dans le cas contraire, l'algorithme selon l'invention est mis en oeuvre selon les étapes suivantes.

Tout d'abord, l'émetteur/récepteur radio mémorise l'identité du combiné appelant PID pour "Portable Identification Code" et calcule un retard R en fonction de la valeur du RSSI mesuré.

En pratique, plus le niveau RSSI est faible et plus le retard R est grand.

Une fois le retard R écoulé, l'unité de contrôle UC recherche si le poste autonome ainsi identifié émet toujours, et en cas d'un résultat de recherche positif, la borne répond alors audit poste, tandis que pendant l'écoulement du retard, la borne répond immédiatement à un autre poste autonome qui effectue sur l'un des canaux de l'ensemble des canaux scrutés une demande d'établissement présentant une grandeur de qualité supérieure au seuil prédéterminé.

En pratique, la recherche s'effectue sur l'ensemble des canaux scrutés, ici 40 canaux.

Comme on le verra plus en détail ci-après, l'unité de contrôle comprend des moyens de recherche permettant de rechercher sur l'ensemble des canaux scrutés par la borne, le poste autonome éloigné et identifié, une fois le retard R à la réponse écoulé.

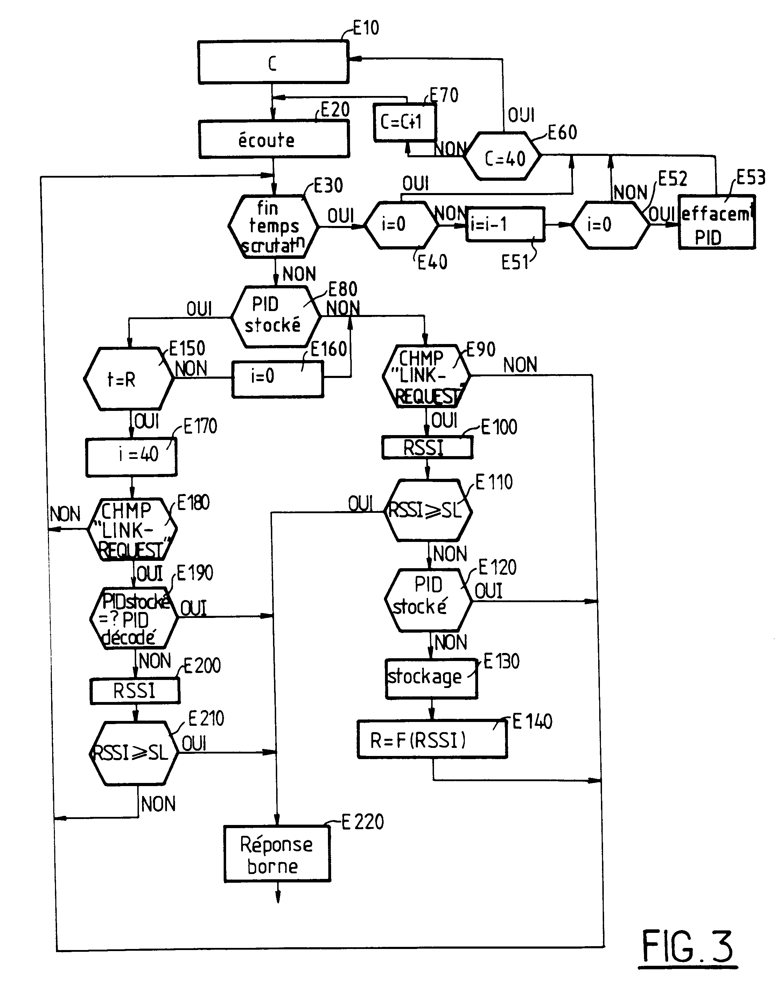

Il est maintenant fait référence à la figure 3 qui est un organigramme illustrant le fonctionnement de l'installation selon l'invention.

Le point de départ de l'algorithme selon l'invention est l'état dans lequel se trouve la voie radio considérée de la borne lorsque ladite voie est en veille, c'est-à-dire qu'elle n'est pas en cours de communication radio avec un poste autonome et qu'elle procède à la scrutation des canaux radio pour rechercher un appel en provenance d'un poste autonome.

Conformément à l'étape E10, il est procédé tout d'abord à la sélection aléatoire d'un canal parmi 40 canaux, c'est-à-dire que la borne choisit selon un processus aléatoire un canal radio parmi les 40 alloués dans la norme CAI. Ce nombre de 40 peut être réduit si la borne connaît par ailleurs l'occupation de l'ensemble des canaux radio.

L'algorithme enchaîne ensuite sur l'étape E20 dans laquelle il est procédé à l'écoute et au décodage d'une émission en MUX3. Plus précisément, les moyens de réception/démodulation de la borne scrutent le canal radio à la recherche d'une émission en MUX3 en provenance d'un poste autonome comportant un marqueur CHMP dans le canal de synchronisation SYN du MUX3.

L'algorithme enchaîne ensuite sur le test de l'étape E30. La borne scrute les 40 canaux en un temps inférieur à 750 millisecondes. Cela entraîne un temps de scrutation par canal inférieur à 18 millisecondes environ.

On vérifie ainsi lors de l'étape E30 si le temps de scrutation alloué par canal radio est écoulé.

Si le temps de scrutation est écoulé, la scrutation sur ce canal est terminée, l'algorithme enchaîne alors sur l'étape E40. Dans le cas contraire, la scrutation continue sur ce canal et l'algorithme enchaîne sur l'étape E80.

Lors de l'étape E40, l'unité de contrôle vérifie si les moyens de recherche sont activés pour un poste autonome éloigné et/ou si le retard R est écoulé.

Si l'indicateur de recherche est nul, ce qui signifie que les moyens de recherche ne sont pas activés, ou si le retard R n'est pas écoulé, l'algorithme enchaîne sur l'étape E60.

Dans le cas contraire, l'indicateur de recherche est décrémenté, la recherche étant terminée pour ce canal radio, l'algorithme enchaîne alors sur l'étape E51.

L'étape E51 consiste à décrémenter l'indicateur de recherche. Si les moyens de recherche ont été activés par un combiné éloigné, si le retard R est écoulé, et si le poste autonome n'a pas été trouvé sur ce canal radio, l'algorithme enchaîne alors sur l'étape E52.

Lors de l'étape E52, la borne vérifie si le combiné a été recherché sur les 40 canaux ou plus généralement sur l'ensemble des canaux en scrutation.

Si l'indicateur de recherche est nul, le combiné éloigné a été recherché sur l'ensemble des canaux scrutés par la borne, l'algorithme enchaîne alors sur l'étape E53, sinon l'algorithme enchaîne sur le test E60.

Lors de l'étape E53, il est procédé à l'effacement de l'identité du poste éloigné PID stockée dans la mémoire de l'unité de contrôle car ce poste autonome éloigné qui a fait l'objet de la recherche pendant le retard R à la réponse de la borne n'a pas été détecté sur l'ensemble des canaux scrutés par la borne.

Cette non détection peut résulter des faits suivants :
- une autre borne plus proche a déjà répondu à l'appel dudit poste;
- le poste autonome a cessé sa tentative d'appel ; ou
- le poste autonome est hors de portée de la borne.

Le traitement d'appel de ce combiné est abandonné par la borne. La borne poursuit alors la scrutation des canaux radio conformément à la CAI, l'algorithme enchaîne alors sur le test E60.

Lors de l'étape E60, l'unité de contrôle vérifie si le canal radio qui vient d'être scruté est le quarantième, ou plus généralement le dernier des canaux devant être scruté par la borne.

S'il s'agit effectivement du dernier canal, l'algorithme revient au début pour une nouvelle scrutation complète de l'ensemble des canaux, sinon la borne se positionne en écoute sur le canal conformément à l'étape E70.

L'étape E80 vient à la suite de l'étape E70. Lors de l'étape E80, il est procédé au test relatif au stockage de l'identité du poste PID dans la mémoire de l'unité de contrôle.

Plus précisément, la borne vérifie si un PID correspondant à un poste autonome éloigné a déjà été stocké. En d'autres termes, l'unité de contrôle vérifie si les moyens de recherche ont déjà été mis en oeuvre pour un poste autonome effectuant une tentative d'appel.

Si un PID est déjà stocké, l'algorithme enchaîne sur le test de l'étape E150, sinon, l'algorithme enchaîne sur le test E90.

Lors de l'étape E90, la scrutation du canal radio étant en cours, la borne teste s'il a pu être décodée une émission en MUX3 en provenance d'un poste autonome comportant successivement :
- un marqueur CHMP dans le canal de synchronisation SYN ;
- un message "LINK REQUEST" dans le canal de signalisation D comportant un signal LID pour "Link Identification Code", reconnu par la borne.

Si le test E90 est négatif, cela signifie qu'il n'y a pas d'émission reçue en provenance d'un poste autonome, ou une émission reçue mais à destination d'une autre borne (LID non reconnu). L'algorithme reboucle alors sur le test E30.

Si le test E90 est positif, une émission valide en provenance d'un combiné a été détectée. L'algorithme enchaîne alors sur l'étape E100.

Lors de l'étape E100, l'unité de contrôle acquiert la mesure du niveau du signal reçu RSSI qui a été préalablement élaboré comme on le décrira plus en détail ci-après.

L'algorithme enchaîne ensuite sur le test de comparaison E110.

L'intensité du niveau du signal reçu RSSI est comparée à un seuil de bonne qualité de réception mentionné plus haut.

Si le niveau est supérieur ou égal au seuil, les moyens de recherche ne sont pas mis en oeuvre et l'algorithme enchaîne sur l'étape E220 conformément à la CAI. En revanche, si le niveau est inférieur au seuil, les moyens de recherche sont mis en oeuvre et l'algorithme enchaîne sur le test E120.

L'étape E120 consiste à vérifier si un PID correspondant à un poste autonome éloigné a déjà été stocké. En d'autres termes, l'unité de contrôle vérifie si les moyens de recherche sont déjà mis en oeuvre pour un poste autonome effectuant une tentative d'appel.

Si un PID est déjà stocké, la borne ignore le second combiné, les moyens de recherche poursuivent alors leur recherche pour le poste autonome dont le PID a été préalablement stocké. L'algorithme enchaîne enfin sur l'étape E30 précédemment décrite.

Sinon, il s'agit de la première détection d'un appel provenant d'un poste éloigné, l'algorithme enchaîne alors sur l'étape E130.

Lors de l'étape E130, l'identité PID du poste autonome éloigné ainsi détecté pour la première fois est stockée en mémoire afin de pouvoir établir une liaison radio avec ce combiné s'il est toujours présent lorsque le retard R sera écoulé et pour autant qu'un autre combiné proche n'ait pas été détecté entre-temps.

L'algorithme enchaîne ensuite sur l'étape E140.

Lors de l'étape E140, la borne calcule un retard R à la réponse dont la durée est fonction de l'intensité du niveau du signal reçu RSSI en provenance du poste autonome.

L'algorithme enchaîne ensuite sur le test E30 afin de pouvoir éventuellement répondre au poste autonome sur le même canal radio lorsque le retard R sera écoulé.

Après l'étape E80 qui est à la suite de l'étape E30, l'algorithme enchaîne sur l'étape E150.

Lors de l'étape E150, l'unité de contrôle vérifie si le retard R à la réponse préalablement élaboré est écoulé.

Si le retard R est écoulé, l'algorithme enchaîne sur l'étape E180 sinon sur l'étape E160.

Lors de l'étape E160, l'indicateur de recherche est initialisé à 0, puis l'algorithme passe à l'étape E90.

Lors de l'étape E170, l'indicateur de recherche est initialisé à 40 ou plus généralement au nombre de canaux radio scrutés par la borne, afin de rechercher le combiné sur l'ensemble des canaux pour lui répondre.

Ensuite, l'algorithme enchaîne sur l'étape E180.

Lors de l'étape E180, la scrutation du canal radio étant en cours, la borne teste s'il a pu être décodée une émission en MUX3 en provenance d'un poste autonome comportant successivement :
- un marqueur CHMP dans le canal de synchronisation SYN ;
- un message LINK REQUEST dans le canal de signalisation D comportant un champ LID reconnu par la borne.

Si le test E180 est négatif, cela signifie qu'il n'y a pas d'émission reçue en provenance d'un combiné, ou l'émission reçue est à la destination d'une autre borne dont le LID n'est pas reconnu. L'algorithme reboucle alors sur le test E30.

Si le test E180 est positif, une émission valide en provenance d'un combiné a été détectée, l'algorithme enchaîne ensuite sur le test E190.

Lors de l'étape E190, la borne vérifie si le PID du combiné dont on vient de décoder un appel est identique au PID du poste autonome éloigné dont le retard R à la réponse de la borne est écoulé.

En d'autres termes, l'unité de contrôle vérifie s'il s'agit du même poste autonome.

S'il s'agit du même poste autonome, l'algorithme enchaîne enfin sur l'étape E220 sinon sur l'étape E200.

Lors de l'étape E200, la borne acquiert la mesure du niveau du signal reçu de la même façon que celle décrite dans l'étape E100 et procède ensuite au test de comparaison E210.

Lors de l'étape E210, l'intensité du niveau du signal reçu RSSI est comparée au seuil de bonne qualité de réception.

Si le niveau mesuré est supérieur ou égal au seuil prédéterminé, la recherche est abandonnée pour le poste autonome éloigné, tandis que l'algorithme enchaîne sur l'étape E220 pour répondre conformément à la CAI à ce poste autonome qui est donc plus proche que le précédent puisqu'il présente une grandeur de qualité supérieure au seuil.

Par contre, si le niveau est inférieur au seuil, ce qui correspond à un poste autonome éloigné, la borne ignore le second poste, la recherche se poursuit alors pour le premier poste dont on a préalablement stocké l'identité, l'algorithme enchaîne ensuite sur le test E30.

En provenance de l'étape E110 ou de l'étape E210 pour un poste autonome proche ou de l'étape E190 pour un poste éloigné pour lequel le retard R est écoulé, la borne émet la réponse au poste autonome en MUX2 conformément à la CAI (étape E220).

La suite du traitement de la liaison poste autonome-borne s'effectue conformément à la CAI.

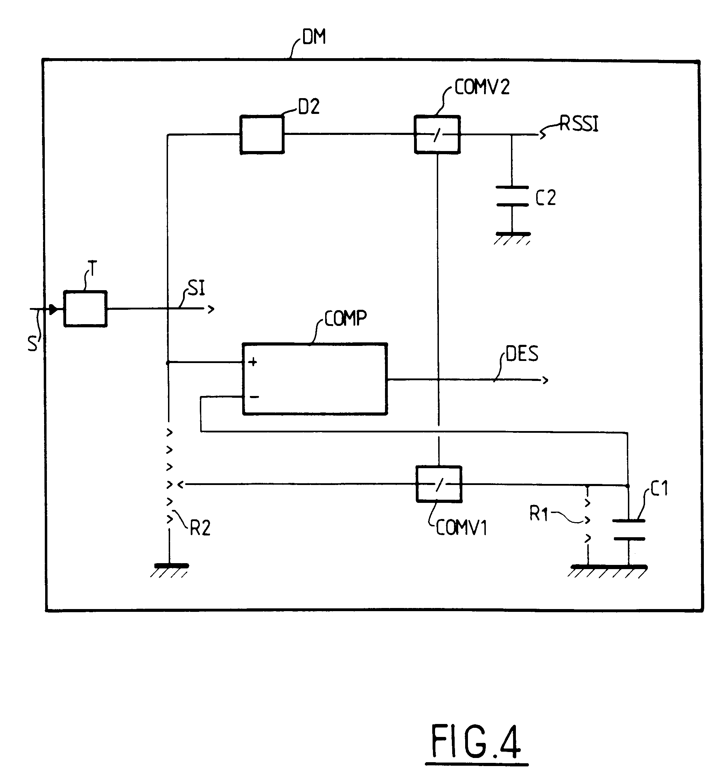

Il est maintenant fait référence à la figure 4 qui représente un dispositif DM permettant de mesurer le niveau d'intensité du signal reçu conformément à l'invention.

Le signal reçu S en provenance de la réception radio CER est converti en tension, selon une loi logarithmique par le dispositif T. Le dispositif T en sortie délivre un niveau instantané SI du signal reçu S.

Un comparateur COMP reçoit à son entrée positive le signal SI.

En pratique, le comparateur COMP actionne un commutateur COMU1 pour élaborer une détection d'enveloppe DES du signal reçu en prélevant une portion du niveau instantané SI par l'intermédiaire du diviseur potentiométrique R2 et en chargeant l'ensemble constitué du condensateur C1 et de la résistance R1 monté en parallèle.

Il est à noter que la détection d'enveloppe DES est ici auto-ajustable en fonction du niveau du signal reçu car le comparateur a comme référence de comparaison une portion du niveau du signal reçu et non une valeur absolue.

En sortie du comparateur COMP est donc obtenu un signal représentatif de la détection d'enveloppe DES du signal reçu .

Par ailleurs, le signal instantané SI traverse un dispositif D2 formant adaptateur d'impédance et qui charge un condensateur C2 à travers un commutateur COMU2 commandé par le signal de détection d'enveloppe DES de façon à élaborer un niveau d'intensité du signal reçu RSSI.

La valeur du condensateur C2 est déterminée de façon à ce que le filtrage ou la moyenne réalisée sur le RSSI possède une constante de temps permettant de détecter une variation du signal pendant un évanouissement ("fading").

Le niveau de l'intensité du signal reçu RSSI est ici la valeur moyenne de la valeur crête du signal reçu instantané SI pendant la phase de réception ( en alternat).

Le niveau d'intensité du signal reçu RSSI ainsi mesuré est ensuite converti en numérique à l'aide d'un convertisseur analogique/numérique CAN représenté à la figure 1. La conversion analogique/numérique est par exemple effectuée sur 8 bits (256 niveaux).

L'unité de contrôle UC de la borne élabore alors pendant le temps de scrutation du canal une moyenne numérique des valeurs converties du niveau du signal reçu RSSI. Cette dernière moyenne est alors comparée au seuil de bonne qualité de réception en cas de détection d'un appel en provenance d'un combiné.

Il est à noter que la mesure du signal reçu est ici décrite en référence à une réalisation matérielle. Bien entendu, cette réalisation pourrait être effectuée d'une manière différente ou par logiciel.

Comme mentionné ci-avant, le retard R à la réponse est calculé en fonction de la valeur du niveau de l'intensité RSSI du signal reçu, et plus précisément en fonction de l'écart entre le niveau du signal reçu RSSI et le seuil de bonne qualité de réception.

En se référant à l'algorithme décrit en référence à la figure 3, il est à noter que le retard effectif sur la réponse de la borne est la somme du retard calculé et du temps de recherche du combiné sur les 40 canaux maximum. En d'autres termes, le retard calculé peut être majoré au maximum de 750 millisecondes.

La fonction de calcul du retard R est du type :

R = R0 + ( delta x RE ) avec R0 = retard minimum, RE = retard élémentaire et delta la différence entre la valeur moyenne du niveau du signal reçu et le seuil de bonne qualité de réception.

Le retard minimum R0 est déterminé de telle sorte qu'il soit possible à une autre borne plus proche de répondre au poste autonome sans risquer de perturber son émission radio. Les scrutations des canaux par les bornes débutant par un numéro de canal aléatoire et l'émission d'un poste autonome en MUX3 durant au minimum 750 millisecondes, le retard R0 correspond donc à la somme des signaux Tpcyc (750 ms) et Tftx (84 ms), c'est-à-dire 834 millisecondes.

En ce qui concerne le retard élémentaires RE, celui-ci est déterminé de telle sorte que pendant ce retard élémentaire une autre borne éloignée ayant calculé un retard immédiatement inférieur ne voit pas sa réponse perturbée. On rappelle que selon l'algorithme décrit en référence à la figure 3, pendant l'écoulement du retard R, la borne recherche sur les 40 canaux une émission en MUX3 en provenance du poste autonome et ne lui répond que pour autant que ledit poste autonome ait été retrouvé.

La CAI impose au poste autonome de cesser son émission en MUX3 lorsqu'il a détecté la réponse d'une borne. Plus généralement, on considérera que le poste autonome cesse l'émission en MUX3 lorsqu'il détecte le signal LINK GRANT en MUX2 dont la réception dure 6 millisecondes.

On détermine alors le retard élémentaire RE comme la somme de 6 millisecondes avec une marge de 4 millisecondes, soit alors 10 millisecondes.

Le delta représente une différence sur des valeurs numériques codées sur 8 bits. Il peut donc varier entre 0 et 255 au maximum.

Le retard maximum calculé vaut alors 834 + 255 x 10 c'est-à-dire 3384 millisecondes. Le retard maximum effectif vaut alors 3384 millisecondes + 750 millisecondes = 4134 millisecondes.

Il en résulte que dans le pire des cas où un poste autonome éloigné a été détecté une première fois 750 millisecondes après qu'il ait débuté son émission en MUX3, la réponse de la borne est émise 4884 millisecondes après le début de l'émission en MUX3 (4134+750). Cette valeur est bien inférieure au 5 secondes imposées par la CAI pour l'établissement d'appel.

## Revendications

1. Installation téléphonique comprenant :
- au moins une borne fixe (BFR) reliée à un réseau téléphonique ;
- au moins deux postes autonomes (PA1 et PA2) capables respectivement d'une intercommunication avec la borne fixe à travers un milieu de communication radioélectrique reliant à distance la borne fixe et chacun des postes autonomes ;
- la borne fixe (BFR) comprenant des moyens de traitement propres à scruter au moins un sous-ensemble des canaux du milieu de transmission radioélectrique pour déterminer si l'un des postes autonomes demande l'établissement d'une communication sur l'un des canaux dudit sous-ensemble pendant une durée prédéterminée allouée à ce canal, la borne fixe choisissant le premier canal dudit sous-ensemble aléatoirement et passant ensuite à l'écoute du canal suivant en cas d'absence de demande d'établissement pendant ladite durée allouée à ce canal, les moyens de traitement étant propres, en présence d'une demande d'établissement sur un canal dudit sous-ensemble, à mesurer une grandeur de qualité de ladite demande d'établissement, et à comparer ladite grandeur à un seuil prédéterminé ; en présence d'une grandeur de qualité supérieure au seuil prédéterminé, la borne fixe étant propre à répondre immédiatement à la demande d'établissement ;
caractérisée en ce qu'en présence d'une grandeur inférieure au seuil prédéterminé, les moyens de traitement mémorisent l'identité du poste autonome appelant et calculent un retard à la réponse à la demande d'établissement en fonction de la valeur de la grandeur ainsi mesurée ; et
en ce qu'une fois le retard à la réponse écoulé, les moyens de traitement recherchent si le poste autonome ainsi identifié émet toujours, et en cas d'un résultat de recherche positif, la borne répond alors audit poste tandis que pendant l'écoulement du retard, la borne répond immédiatement à un autre poste autonome qui effectue, sur l'un des canaux de l'ensemble des canaux scrutés, une demande d'établissement présentant une grandeur de qualité supérieure au seuil prédéterminé.

2. Installation selon la revendication 1, caractérisée en ce que la grandeur de qualité d'une demande d'établissement de communication correspond au niveau du signal représentatif du niveau d'intensité du signal reçu.

3. Installation selon l'une quelconque des précédentes revendications, caractérisée en ce que la recherche s'effectue sur l'ensemble des canaux scrutés.

4. Installation selon l'une quelconque des précédentes revendications, caractérisée en ce que les moyens qui mesurent la grandeur de qualité de la demande d'établissement comprennent un dispositif (DM) comportant :
- un convertisseur en tension (T) du signal reçu (S) délivrant à sa sortie un niveau instantané (SI) du signal reçu (S) ;
- un comparateur (COMP) recevant à son entrée positive le signal instantané (SI) et délivrant à sa sortie un signal représentatif de la détection d'enveloppe (DES) du signal instantané (SI) ;
- un adaptateur d'impédance (D2) recevant à son entrée le signal instantané (SI) et délivrant à sa sortie un signal propre à charger un condensateur (C2) à travers un commutateur (COMU2) commandé par le signal de détection d'enveloppe (DES) de façon à élaborer un niveau d'intensité de signal reçu (RSSI).

5. Installation selon l'une quelconque des précédentes revendications, caractérisée en ce que le retard (R) correspond à la somme du retard minimum (RO) avec le produit du retard élémentaire (RE) et de la différence entre la valeur moyenne du niveau du signal reçu et le seuil de bonne qualité de réception.

6. Borne fixe pour la mise en oeuvre de l'installation selon l'une des revendications précédentes.
